# EUROPEAN PATENT APPLICATION

(11) **EP 4 851 242 A1**
(43) Date of publication of application: **09.12.2026**
(21) Application number: 25775272.5
(22) Date of filing: 05.03.2025
(51) Int. Cl.: C08L 21/00, B29C 48/09, C08K 3/04, F16L 11/10

(54) **RUBBER COMPOSITION FOR EXTRUSION MOLDING, HOSE, AND HOSE MANUFACTURING METHOD**

(30) Priority: 29.03.2024 JP 2024056099
(71) Applicant: Sumitomo Riko Company Limited, Komaki-shi, Aichi 485-8550 (JP)
(72) Inventor: HIRADO, Motoki, Komaki-shi, Aichi 485-8550 (JP); KUMAGAI, Shinji, Komaki-shi, Aichi 485-8550 (JP); HIRAI, Ryo, Komaki-shi, Aichi 485-8550 (JP); NODA, Masashi, Komaki-shi, Aichi 485-8550 (JP)
(74) Representative: Hoffmann Eitle
(86) International application number: PCT/JP2025/008031
(87) International publication number: WO 2025/204644

(57) **Abstract**

A rubber composition for extrusion molding that provides an excellent extrusion surface (extrusion processability) during extrusion processing is provided. The rubber composition for extrusion molding contains a rubber component and recovered carbon black. When the rubber composition for extrusion molding is analyzed under image analysis conditions, recovered carbon black with a particle size of 3 to 12 µm has an area ratio of 5.9 to 12.1%.

## Description

### TECHNICAL FIELD

The present disclosure relates to a rubber composition for extrusion molding suitable for extrusion molding, a hose made of the rubber composition for extrusion molding, and a method for producing the hose.

### BACKGROUND ART

In recent years, as attention has focused on resource conservation and environmental protection, there has been consideration of replacing carbon black made from petroleum-derived raw materials with recovered carbon black obtained by pyrolysis of waste tires and other carbon black-containing rubber products for the purpose of carbon neutrality (reduction of CO₂ emissions).

For example, JP-A-2022-146475 describes a rubber composition for tires containing diene rubber, carbon black, and recovered carbon black.

### RELATED ART DOCUMENT

### PATENT DOCUMENT

JP-A-2022-146475

### SUMMARY

### PROBLEMS TO BE SOLVED BY THE DISCLOSURE

The rubber composition for tires described in JP-A-2022-146475 is suitable for manufacturing tires, but when it is used for extrusion molding, cracks may occur between recovered carbon black and rubber during extrusion molding due to poor interaction (reinforcing property) at the interface between recovered carbon black and rubber, and the cracks propagate to form larger cracks, resulting in a poor extrusion surface.

The present disclosure was made in view of such a circumstance and provides a rubber composition for extrusion molding that provides an excellent extrusion surface (extrusion processability) during extrusion processing.

### MEANS FOR SOLVING THE PROBLEMS

The inventors of the present disclosure have conducted elaborate study to solve the above problem. In the course of the study, it has been found that if the area ratio of recovered carbon black with a particle size of around 10 µm in the rubber composition is within a specific range, the rubber composition for extrusion molding that provides an excellent extrusion surface (extrusion processability) during extrusion processing may be obtained.

In other words, the present disclosure has the following [1] to [6] as subject matters in order to achieve the object.
[1] A rubber composition for extrusion molding, comprising a rubber component and recovered carbon black, wherein
   when the rubber composition for extrusion molding is analyzed under following image analysis conditions, recovered carbon black with a particle size of 3 to 12 µm has an area ratio of 5.9 to 12.1%:
   [Image Analysis Conditions]
   (CLAHE algorithm)
   contrast limit: 2.0
   grid size: 8,8
   (Non-local means filter)
   h: 15
   template window size: 7
   search window size: 21
   (Adaptive binarization)
   black size: 101
   C: -4.
[2] The rubber composition for extrusion molding according to [1], further comprising petroleum-derived carbon black.
[3] The rubber composition for extrusion molding according to [2], wherein a mass ratio of the recovered carbon black to the petroleum-derived carbon black (recovered carbon black/petroleum-derived carbon black) is 10/90 to 90/10.
[4] The rubber composition for extrusion molding according to any one of [1] to [3], wherein a total amount of carbon black in the rubber composition for extrusion molding is 100 parts by mass or more with respect to 100 parts by mass of the rubber component.
[5] A hose comprising the rubber composition for extrusion molding according to any one of [1] to [4].
[6] A method for producing the hose according to [5], wherein the hose is produced by extrusion-molding the rubber composition for extrusion molding using a draw-down extrusion extruder.

### EFFECTS OF THE DISCLOSURE

The present disclosure provides a rubber composition for extrusion molding with excellent extrusion processability.

### BRIEF DESCRIPTION OF DRAWINGS

FIG. 1 is a diagram illustrating an example of extrusion molding using a draw-down extrusion extruder; and
FIG. 2 is a configuration diagram illustrating an example of a hose according to the present disclosure.

### EMBODIMENTS OF THE DISCLOSURE

Embodiments of the present disclosure will now be described in detail. However, the present disclosure is not limited to the embodiments described below.

As used herein "X and/or Y (X and Y are any given configurations)" means at least one of X and Y, and may have three meanings: only X; only Y; and X and Y

A rubber composition for extrusion molding according to one embodiment of the present disclosure (which hereinafter may be referred to as "present rubber composition") comprises a rubber component and recovered carbon black, wherein when the rubber composition for extrusion molding is analyzed under image analysis conditions described later, recovered carbon black with a particle size of 3 to 12 µm has an area ratio of 5.9 to 12.1%.

Recovered carbon black is usually produced by burning carbon black-containing rubber products, such as waste tires, industrial conveyor belts, power transmission belts, and rubber hoses, and thus includes, in addition to carbon black, an ash content derived from rubber components and the like of about 15 to 20%. This ash content is combined with carbon black to form particles in recovered carbon black. The particles vary in size and may be roughly divided into three particle sizes: 1 µm or less; around 10 µm; and 100 µm or more.

Unlike petroleum-derived carbon black, recovered carbon black does not have functional groups on its surface and therefore has poor interaction with rubber components.

When this recovered carbon black is blended into a rubber composition for extrusion molding, the recovered carbon black is dispersed but the extrusion surface deteriorates.

The inventors of the present disclosure have found that the deterioration of the extrusion surface is due to poor interaction (reinforcing property) at the interface between recovered carbon black, especially recovered carbon black with a particle size of around 10 µm, and the rubber component. This causes cracks between the recovered carbon black with a particle size of around 10 µm and the rubber during extrusion molding, and these cracks propagate.

Therefore, in the present rubber composition, the area ratio of recovered carbon black with a particle size of 3 to 12 µm is set within a specific range so that cracks between the recovered carbon black and the rubber may be suppressed and excellent extrusion processability is achieved.

In the course of the study, the inventors have also found that the use of the present rubber composition increases the volume resistivity. In other words, if petroleum-derived carbon black is used in a rubber composition for extrusion molding, the volume resistivity is low because petroleum-derived carbon black is conductive. On the other hand, since recovered carbon black contains ash, the volume resistivity of the present rubber composition containing recovered carbon black is higher. The present rubber composition therefore may also suppress electrical degradation.

Embodiments of the present disclosure will be described in more detail below.

### [Rubber Component]

The rubber component used in the present rubber composition is not particularly limited. Examples of the rubber component include diene rubbers.

Examples of the diene rubbers include natural rubber (NR), butadiene rubber (BR), styrene-butadiene rubber (SBR), chloroprene rubber (CR), isoprene rubber (IR), acrylonitrile-butadiene rubber (NBR), ethylene-propylene rubber (EPM), ethylene-propylene-diene rubber (EPDM), and butyl rubber (IIR).

These may be used alone or in combination of two or more. Among those, ethylene-propylene rubbers such as EPDM and EPM are preferred, and EPDM is particularly preferred.

A diene monomer used as a third component that constitutes the EPDM is not particularly limited, but a diene monomer having 5 to 20 carbon atoms is preferred. Specifically, examples include 1,4-pentadiene, 1,4-hexadiene, 1,5-hexadiene, 2,5-dimethyl-1,5-hexadiene, 1,4-octadiene, 1,4-cyclohexadiene, cyclooctadiene, dicyclopentadiene (DCP), 5-ethylidene-2-norbornene (ENB), and 5-butylidene-2-norbornene. These may be used alone or in combination of two or more. Among those, DCP and ENB are preferred.

The ethylene content of the ethylene-propylene rubber is not particularly limited, but is preferably 48 to 70% by mass, more preferably 50 to 60% by mass, from the viewpoint of significantly achieving the effect of the present disclosure.

The propylene content of the EPDM is not particularly limited, but is preferably 22 to 46% by mass, more preferably 30 to 44% by mass, from the viewpoint of significantly achieving the effect of the present disclosure.

The diene monomer content of the EPDM is not particularly limited, but is preferably 3 to 11% by mass, more preferably 3.5 to 6% by mass.

The iodine value of the EPDM is not particularly limited, but is preferably 6 to 30, more preferably 10 to 24, from the viewpoint of significantly achieving the effect of the present disclosure.

The content of the rubber component is not particularly limited, but is usually 20% by mass or more, preferably 25% by mass or more, more preferably 28 to 60% by mass, with respect to the present rubber composition (100% by mass).

### [Recovered Carbon Black (Recovered CB)]

The recovered carbon black may be obtained by pyrolysis of carbon black-containing rubber products, such as waste tires, industrial conveyor belts, power transmission belts, and rubber hoses, using known means.

As mentioned above, recovered carbon black contains ash derived from rubber components and the like. The ash content is usually 10 to 30% by mass, preferably 13 to 25% by mass, more preferably 15 to 20% by mass. When the ash content is within the above range, the dispersibility with the rubber component tends to be excellent. The ash content may be measured by a method in accordance with JIS K 6218-2.

The recovered carbon black may be present in such an amount that the area ratio of recovered carbon black with a particle size of 3 to 12 µm is within a specific range when analyzed under the image analysis conditions described below. The content of the recovered carbon black is usually 5 to 200 parts by mass, preferably 20 to 180 parts by mass, more preferably 30 to 170 parts by mass, even more preferably 40 to 160 parts by mass, particularly preferably 50 to 150 parts by mass, with respect to 100 parts by mass of the rubber component. When the content of the recovered carbon black is within the above range, the effect of the present disclosure tends to be more suitably obtained, the volume resistivity is higher, and furthermore, the carbon neutrality tends to be excellent.

In addition to the rubber component and the recovered carbon black, the present rubber composition preferably comprises, for example, petroleum-derived carbon black.

### [Petroleum-Derived Carbon Black (CB)]

The petroleum-derived carbon black is not particularly limited. Examples of the petroleum-derived carbon black include furnace black (furnace carbon black) such as SAF (Super Abrasion Furnace), ISAF (Intermediate Super Abrasion Furnace), HAF (High Abrasion Furnace), MAF (Medium Abrasion Furnace), FEF (Fast Extruding Furnace), SRF (Semi-Reinforcing Furnace), GPF (General Purpose Furnace), APF (All Purpose Furnace), FF (Fine Furnace), CF (Coarse Furnace), SCF (Semi-Coarse Furnace), and ECF (Extra Coarse Furnace); acetylene black (acetylene carbon black); thermal black (thermal carbon black) such as FT and MT; channel black (channel carbon black) such as EPC, MPC, and CC; and graphite. These may be used alone or in combination of two or more. Among those, furnace black is preferred, and SRF is particularly preferred.

The petroleum-derived carbon black preferably has an average particle size of 100 nm or less, more preferably 90 nm or less, even more preferably 75 nm or less. The lower limit of the average particle size is not set, but is preferably 15 nm or more. When the average particle size of the petroleum-derived carbon black is set within the above range, the dispersibility with the rubber component tends to be excellent. The average particle size of the petroleum-derived carbon black may be measured by using TEM or the like.

The amount of dibutyl phthalate (DBP) absorption of the petroleum-derived carbon black is preferably 40 to 250 ml/100 g, more preferably 50 to 200 ml/100 g, particularly preferably 50 to 160 ml/100 g. When the amount of DBP absorption of the petroleum-derived carbon black is within the above range, the dispersibility with the rubber component tends to be excellent.

The amount of DBP absorption may be measured for an uncompressed sample in accordance with JIS K 6217-4 (2017).

When the present rubber composition contains petroleum-derived carbon black, the content of the petroleum-derived carbon black is preferably 5 to 200 parts by mass, more preferably 20 to 150 parts by mass, even more preferably 30 to 130 parts by mass, particularly preferably 35 to 110 parts by mass, with respect to 100 parts by mass of the rubber component. When the content of the petroleum-derived carbon black is within the above range, the effect of the present disclosure tends to be more suitably obtained.

The mass ratio of the recovered carbon black to the petroleum-derived carbon black (recovered CB/CB) is preferably 10/90 to 90/10, more preferably 20/80 to 85/15, even more preferably 40/60 to 80/20. When the ratio of the recovered carbon black to the petroleum-derived carbon black is within the above range, the effect of the present disclosure tends to be more suitably obtained.

Furthermore, the total amount of carbon black (total amount of recovered carbon black and petroleum-derived carbon black) in the present rubber composition is preferably 100 parts by mass or more, more preferably 110 parts by mass or more, particularly preferably 120 parts by mass or more, with respect to 100 parts by mass of the rubber component. The upper limit of the total amount of carbon black is usually 200 parts by mass or less, preferably 150 parts by mass or less. When the total amount of carbon black is within the above range, the effect of the present disclosure tends to be more suitably obtained.

The present rubber composition may be blended with compounding agents usually used in the rubber industry, such as a vulcanizing agent, a vulcanization accelerator, a vulcanization aid, a plasticizer, an anti-aging agent, and a filler other than recovered carbon black and petroleum-derived carbon black, to the extent that the effect of the present disclosure is not impaired. These may be used alone or in combination of two or more.

### [Vulcanizing Agent]

Examples of the vulcanizing agent include sulfur vulcanizing agents and peroxide vulcanizing agents. These may be used alone or in combination of two or more.

Examples of the sulfur vulcanizing agents include powdered sulfur, precipitated sulfur, colloidal sulfur, surface-treated sulfur, and insoluble sulfur.

Examples of the peroxide vulcanizing agents include 2,4-dichlorobenzoyl peroxide, benzoyl peroxide, 1,1-di-t-butylperoxy-3,3,5-trimethylcyclohexane, 2,5-dimethyl-2,5-dibenzoylperoxyhexane, n-butyl-4,4'-dit-butylperoxyvalerate, dicumyl peroxide, t-butylperoxybenzoate, di-t-butylperoxy-diisopropylbenzene, t-butylcumylperoxide, 2,5-dimethyl-2,5-di-t-butylperoxyhexane, di-t-butylperoxide, 2,5-dimethyl-2,5-di-t-butylperoxyhexyne-3, and 1,3-bis-(t-butylperoxy-isopropyl)benzene.

When a sulfur vulcanizing agent is used as the vulcanizing agent, the content of the sulfur vulcanizing agent is preferably 0.5 to 15 parts by mass, particularly preferably 0.6 to 5 parts by mass, with respect to 100 parts by mass of the rubber component from the viewpoint of significantly achieving the effect of the present disclosure.

When a peroxide vulcanizing agent is used as the vulcanizing agent, the content of the peroxide vulcanizing agent is preferably 0.5 to 30 parts by mass, more preferably 1 to 20 parts by mass, even more preferably 1.5 to 10 parts by mass, with respect to 100 parts by mass of the rubber component from the viewpoint of significantly achieving the effect of the present disclosure.

### [Vulcanization Accelerator]

The vulcanization accelerator is not particularly limited. Examples of the vulcanization accelerator include thiuram vulcanization accelerators such as tetramethylthiuram disulfide, dipentamethylenethiuram tetrasulfide, tetraethylthiuram disulfide, tetrabutylthiuram disulfide, tetrakis(2-ethylhexyl)thiuram disulfide, and tetrabenzylthiuram disulfide; sulfenamide vulcanization accelerators such as N-oxydiethylene-2-benzothiazolylsulfenamide, N-cyclohexyl-2-benzothiazolylsulfenamide, N-t-butyl-2-benzothiazolylsulfenamide, and N,N'-dicyclohexyl-2-benzothiazolylsulfenamide; thiazole vulcanization accelerators such as dibenzothiazole disulfide, dibenzothiazyl disulfide, 2-mercaptobenzothiazole, 2-mercaptobenzothiazole sodium salt, and 2-mercaptobenzothiazole zinc salt (ZnMBT); dithioate vulcanization accelerators such as zinc dibutyldithiocarbamate; sulfur chloride, and sulfur dichloride. These may be used alone or in combination of two or more.

When the present rubber composition contains a vulcanization accelerator, the content of the vulcanization accelerator is not particularly limited, but is usually 0.1 to 10 parts by mass, preferably 0.5 to 8 parts by mass, more preferably 1 to 5 parts by mass, with respect to 100 parts by mass of the rubber component.

### [Vulcanization Aid]

The vulcanization aid is not particularly limited. Examples of the vulcanization aid include zinc oxide, flowers of zinc (ZnO), stearic acid, and magnesium oxide. These may be used alone or in combination of two or more.

Examples of the zinc oxide include zinc oxide type 1, zinc oxide type 2, zinc oxide type 3, and fine zinc oxide.

When the present rubber composition contains a vulcanization aid, the content of the vulcanization aid is not particularly limited, but is usually 1 to 25 parts by mass, preferably 3 to 10 parts by mass, with respect to 100 parts by mass of the rubber component.

### [Plasticizer]

The plasticizer is not particularly limited. Examples of the plasticizer include aromatic oils, ether ester plasticizers, and process oils. These may be used alone or in combination of two or more.

Examples of the aromatic oils include Diana Process AC-12, Diana Process AC-460, and Diana Process AH-16 (manufactured by Idemitsu Showa Shell), JSO AROMA 790 (manufactured by Japan Sun Oil Company, Ltd.), and Aromax 1, and Aromax 3 (manufactured by FUJI KOSAN COMPANY, LTD.).

Examples of the ether ester plasticizers include plasticizers having both ether and ester bonds in one molecule, specifically, adipic acid ether ester plasticizers such as bis[2-(2-butoxyethoxy)ethyl] adipate.

Examples of the process oils include naphthene oils and paraffin oils.

When the present rubber composition contains a plasticizer, the content of the plasticizer is not particularly limited, but is usually 5 to 100 parts by mass, preferably 20 to 80 parts by mass, with respect to 100 parts by mass of the rubber component.

### [Anti-Aging Agent]

Examples of the anti-aging agent include carbamate anti-aging agents, phenylenediamine anti-aging agents, phenol anti-aging agents, phenylamine anti-aging agents, diphenylamine anti-aging agents, quinoline anti-aging agents, imidazole anti-aging agents, and waxes. These may be used alone or in combination of two or more.

When the present rubber composition contains an anti-aging agent, the content of the anti-aging agent is not particularly limited, but is usually 0.5 to 10 parts by mass, preferably 0.7 to 8 parts by mass, more preferably 1 to 6 parts by mass, with respect to 100 parts by mass of the rubber component.

### [Filler]

The filler is not particularly limited. Examples of the filler include talc, mica, clay, and calcium carbonate. These may be used alone or in combination of two or more.

When the present rubber composition contains a filler, the content of the filler is not particularly limited, but is usually 20 to 180 parts by mass, preferably 50 to 160 parts by mass, with respect to 100 parts by mass of the rubber component.

### [Preparation of Present Rubber Composition]

The present rubber composition may be prepared by appropriately blending and kneading the rubber component, recovered carbon black, and, if necessary, the various optional materials, using a kneading machine such as a kneader, a roll, or a Banbury mixer.

In the resulting present rubber composition, recovered carbon black with a particle size of 3 to 12 µm has an area ratio of 5.9 to 12.1% when analyzed under the following image analysis conditions. The lower limit of the area ratio is preferably 7% or more, more preferably 8% or more, particularly preferably 9% or more.

The present rubber composition has excellent extrusion processability because the area ratio of recovered carbon black with a particle size of 3 to 12 µm, which may cause cracking during extrusion processing, is within the above range. In addition, the present rubber composition exhibits high volume resistivity and also has excellent carbon neutrality because the area ratio of recovered carbon black with a particle size of 3 to 12 µm is within the above range.

### [Image Analysis Conditions]

The present rubber composition is molded into a vulcanized rubber sheet with a thickness of 2 mm in accordance with a usual method. A smooth surface of the vulcanized rubber sheet is produced with a microtome and photographed with a scanning electron microscope. The photographed image is analyzed using "OpenCV" by Intel Corporation under the following image analysis conditions.

The photograph is taken at 150x magnification, and if the location where the photograph is taken contains recovered carbon black with a particle size of 100 µm or more, the photographed location is changed. Photographs are taken at four locations that do not contain recovered carbon black with a particle size of 100 µm or more.

The area ratio of recovered carbon black with a particle size of 3 to 12 µm is the average of the results of image analysis at the four locations where photographs are taken.
[Image Analysis Conditions]
(CLAHE algorithm)
contrast limit: 2.0
grid size: 8,8
(Non-local means filter)
h: 15
template window size: 7
search window size: 21
(Adaptive binarization)
black size: 101
C: -4

The present rubber composition contains recovered carbon black and therefore has a high volume resistivity, and the volume resistivity (Ω·cm) of the present rubber composition at 25°C is usually 10⁶ Ω·cm or higher, preferably 10⁸ Ω·cm or higher, more preferably 10¹⁰ Ω·cm or higher. The upper limit of the volume resistivity is not particularly limited, but is usually 10¹² Ω·cm or less. When the volume resistivity is in the above range, electrical degradation of the present rubber composition may be suppressed. The volume resistivity may be obtained by measurement in accordance with JIS K 6271-1.

The present rubber composition has excellent extrusion moldability and may be suitably used as a material for hoses obtained by extrusion molding, especially for hoses obtained by extrusion molding using a draw-down extrusion extruder in which a material is extruded while being pulled.

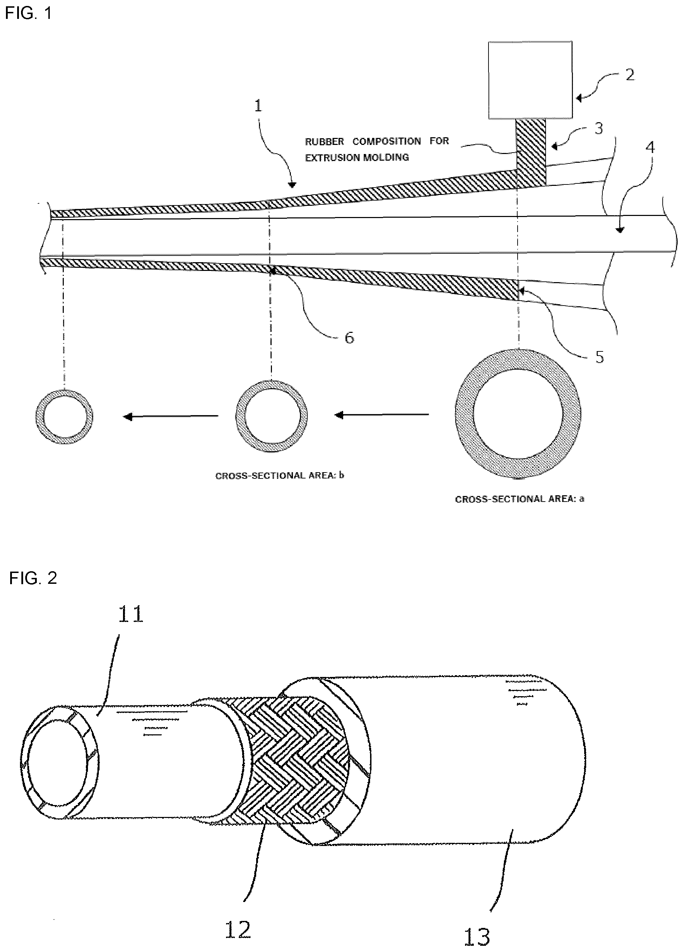

An example of a method for producing a hose made of the present rubber composition using a draw-down extrusion extruder will be described below with reference to FIG. 1.

First, as mentioned above, the present rubber composition is prepared by appropriately blending and kneading the rubber component, recovered carbon black, and, if necessary, the various optional materials using a kneading machine such as a kneader, a roll, or a Banbury mixer.

The present rubber composition is fed by an extruder 2 to a feed line 3 and an inlet 5 of a crosshead die. The present rubber composition is then extruded onto a mandrel 4 disposed in the crosshead die 1 and is pulled along the mandrel 4 by a caterpillar (not shown) disposed outside an outlet 6 of the crosshead die to form an unvulcanized hose around the outer circumference of the mandrel 4.

The ratio a/b (draw-down ratio) of the cross-sectional area a of a space (clearance) enclosed by the inner wall of the crosshead die 1 and the mandrel 4 at the inlet 5 of the crosshead die to the cross-sectional area b of an inner tube extruded from the outlet 6 of the crosshead die is usually 5 or more, preferably 10 to 100.

To achieve the above draw-down ratio, the cross-sectional area a of the space, the distance between the inlet 5 of the crosshead die and the outlet 6 of the crosshead die, and the pulling speed by the caterpillar or the like may be adjusted. The inner tube extruded from the outlet 6 of the crosshead die may be further pulled by the caterpillar or the like to further reduce the wall thickness of the hose inner tube.

Then, if a single-layered hose is to be made, the unvulcanized hose is heated and vulcanized under predetermined conditions (e.g., 140 to 160°C for 30 to 60 minutes), and then the mandrel 4 is pulled out to produce a single-layered hose.

In the case of a hose in FIG. 2 having a layered configuration in which a reinforcing yarn layer 12 is provided between a rubber inner layer 11 and a rubber outer layer 13, an unvulcanized hose of the present rubber composition is prepared as described above, and then the reinforcing yarn layer 12 is formed by braiding a reinforcing yarn with a predetermined number of strands held together and a predetermined thread count on the outer circumference of the hose. Then, if necessary, an adhesive is applied to the reinforcing yarn layer 12 by dipping, spraying, roll coating, brushing, or other methods, and a rubber composition for forming the rubber outer layer 13 is extrusion-molded on the adhesive-applied surface (or on the reinforcing yarn layer 12) to produce a laminate (hose structure) in an unvulcanized state. The resulting laminate (hose structure) in the unvulcanized state is then heated and vulcanized under predetermined conditions (e.g., 140 to 160°C for 30 to 60 minutes), and then the mandrel 4 is pulled out to produce a multi-layered hose structure.

The hose may be formed into a desired curved tube shape by using a mandrel with a predetermined curved tube shape as the mandrel 4.

The method for producing a hose made of the present rubber composition using a draw-down extrusion extruder described above is an example and is not limited to this configuration as long as a draw-down extrusion extruder is used. For example, in the above configuration, the present rubber composition is pulled by a caterpillar, but the present rubber composition may be pulled in a die. The presence or absence of a mandrel is also not limited.

The hose made of the present rubber composition obtained in this way is not limited to a single-layered structure or a multi-layered structure with two or more layers laminated, but it is preferable that at least the innermost layer (in the case of a single-layered structure, the single layer) is made of the present rubber composition.

In the hose made of the present rubber composition obtained as described above, the thickness of the innermost layer (in the case of a single-layered structure, the single layer) is preferably 0.25 to 10 mm, more preferably 0.5 to 5 mm. When the rubber outer layer 13 is provided as shown in FIG. 2, the thickness of the rubber outer layer 13 is preferably 0.25 to 10 mm, more preferably 0.5 to 5 mm. The hose inner diameter of the present hose is preferably 5 to 60 mm, more preferably 10 to 40 mm.

The hose made of the present rubber composition may exhibit excellent performance, for example, as a radiator hose, a heater hose, a coolant transport hose for fuel cell systems, or a coolant transport hose for vehicles such as a drain hose.

### EXAMPLES

Examples will now be described along with comparative examples. However, the present disclosure is not limited to these examples.

First, prior to examples and comparative examples, the following materials were prepared.

### [Rubber Component]

Rubber component (EPDM, product name: ESPRENE 532, manufactured by SUMITOMO CHEMICAL COMPANY, LIMITED, ethylene content: 51% by mass, diene content: 3.5% by mass)

### [Recovered Carbon Black (Recovered CB)]

Recovered CB (ash content 17% by mass, "P365" manufactured by Enrestec Inc. in Taiwan)

### [Petroleum-Derived Carbon Black (CB)]

CB (DBP absorption: 125 ml/100 g, average particle size: 62 nm, "SPHERON 5200" manufactured by Cabot Japan K.K.)

### [Vulcanizing Agent]

Vulcanizing agent (sulfur vulcanizing agent, "SULFAX T-10" manufactured by Tsurumi Chemical Industry Co., Ltd.)

### [Vulcanization Accelerator]

Vulcanization accelerator 1 ("SANCELER TET-G" manufactured by SANSHIN CHEMICAL INDUSTRY CO., LTD.)
Vulcanization accelerator 2 ("NOCCELER DM-P" manufactured by OUCHI SHINKO CHEMICAL INDUSTRIAL CO., LTD.)
Vulcanization accelerator 3 ("NOCCELER TRA" manufactured by OUCHI SHINKO CHEMICAL INDUSTRIAL CO., LTD.)
Vulcanization accelerator 4 ("SANCELER CZ-G" manufactured by SANSHIN CHEMICAL INDUSTRY CO., LTD.)

### [Vulcanization Aid]

Vulcanization aid 1 ("Zinc Oxide Type 2" manufactured by MITSUI KINZOKU COMPANY, LIMITED)
Vulcanization aid 2 (Stearic acid powder manufactured by Kao Corporation)

### [Plasticizer]

Plasticizer (paraffin process oil, "Diana Process PW-380" manufactured by Idemitsu Kosan Co., Ltd.)

### [Examples 1 and 2, Comparative Examples 1 and 2, Reference Example 1]

Rubber compositions for extrusion molding were prepared by mixing the materials in the proportions listed in Table below and kneading the materials using a Banbury mixer and an open roll.

The resulting rubber compositions for extrusion molding in Examples, Comparative Examples, and Reference Example were evaluated as follows. The results are also listed in Table 1 below.

### [Area Ratio of Recovered Carbon with Particle Size of 3 to 12 µm]

The rubber compositions for extrusion molding in Examples and Comparative Examples were each pressed by a press vulcanizing machine to produce a vulcanized rubber sheet with a thickness of 2 mm.

A smooth surface of the vulcanized rubber sheet was produced with a microtome and photographed with a scanning electron microscope (150x magnification) at four locations that did not contain recovered carbon black with a particle size of 100 µm or more. The photographed images were analyzed using "OpenCV" by Intel Corporation under the following conditions, and the average value of the four locations subjected to image analysis was obtained.

### [Image Analysis Conditions]

(CLAHE algorithm)
contrast limit: 2.0
grid size: 8,8
(Non-local means filter)
h: 15
template window size: 7
search window size: 21
(Adaptive binarization)
black size: 101
C: -4

### [Extrusion Processability]

The rubber compositions for extrusion molding in Examples, Comparative Examples, and Reference Example were each extruded using an extruder with a screw diameter of 50 mm (manufactured by MITSUBA MFG. CO., LTD.) under the following extrusion conditions and drawn at 1.5 to 2.0 times the discharge rate to produce an unvulcanized tube.

### [Extrusion Conditions]

Jig setting: die with a diameter of 14 mm, spindle with a diameter of 10 mm Temperature setting: head 130°C, cylinder head 120°C, cylinder 110°C, screw 90°C

### Rotation speed: 20 rpm

The unvulcanized tube obtained as described above was visually observed and evaluated according to the following evaluation criteria.

### [Evaluation Criteria]

(Very good): the tube surface was not rough.
(Poor): the tube surface was rough (shark skin-like appearance).

### [Volume Resistivity]

The rubber compositions for extrusion molding in Examples, Comparative Examples, and Reference Example were each pressed by a press vulcanizing machine to produce a vulcanized rubber sheet with a thickness of 2 mm, a length of 100 mm, and a width of 100 mm.

The resulting vulcanized rubber sheet was measured for volume resistivity VR (Ω·cm) in accordance with JIS K 6271-1:2015 (Rubber, vulcanized or thermoplastic-Determination of resistivity). Specifically, the volume resistivity VR was obtained under the following measurement conditions.

### [Measurement Conditions]

Measurement method: guarded-electrode system
Guard electrode: outer diameter 80 mm, inner diameter 70 mm
Main electrode: 50 mm
Sample outer dimensions: 100 mm × 100 mm
Sample thickness: 2 mm
Applied voltage: 1 V
Detection current range: 200 pA to 20 mA

The volume resistivity VR was then evaluated in accordance with the following criteria.

### [Evaluation Criteria]

(Very good): volume resistivity of 10⁶ Ω·cm or higher
(Poor): volume resistivity of lower than 10⁶ Ω·cm

**[Table 1]**

| (parts by mass) | | | | | |
|---|---|---|---|---|---|
| | Example 1 | Example 2 | Comparative Example 1 | Comparative Example 2 | Reference Example 1 |
| Rubber component | 100 | 100 | 100 | 100 | 100 |
| Recovered CB | 65 | 85 | 85 | 130 | 0 |
| CB | 65 | 45 | 40 | 0 | 130 |
| Vulcanizing agent | 1 | 1 | 1 | 1 | 1 |
| Vulcanization accelerator 1 | 1 | 1 | 1 | 1 | 1 |
| Vulcanization accelerator 2 | 1 | 1 | 1 | 1 | 1 |
| Vulcanization accelerator 3 | 1 | 1 | 1 | 1 | 1 |
| Vulcanization accelerator 4 | 1 | 1 | 1 | 1 | 1 |
| Vulcanization, aid 1 | 5 | 5 | 5 | 5 | 5 |
| Vulcanization aid 2 | 1 | 1 | 1 | 1 | 1 |
| Plasticizer | 68 | 68 | 68 | 68 | 68 |
| Total | 309.34 | 309.34 | 304.34 | 309.34 | 309.34 |
| Ratio of recovered CB (% by mass) *¹ | 50 | 65 | 68 | 100 | 0 |
| Area ratio (%) *² | 9.82 | 12.09 | 12.40 | 16.06 | - |
| Extrusion processability | Very good | Very good | Poor | Poor | Very good |
| Volume resistivity (Ω·cm) | Very good (1×10⁷) | Very good (3×10⁸) | Very good (6×10⁸) | Very good (3x10⁹) | Poor (1×10⁵) |

| | | | | | |
|---|---|---|---|---|---|
| _{*}1: Ratio of recovered CB to the total amount of recovered CB and CB _{*}2: Area ratio of recovered carbon black with a particle size of 3 to 12 µm | | | | | |

The results in Table 1 above show that the rubber compositions for extrusion molding in Examples 1 and 2 have excellent extrusion processability because recovered carbon black with a particle size of 3 to 12 µm is present at a specific area ratio when analyzed by image analysis.

On the other hand, the rubber compositions for extrusion molding in Comparative Examples 1 and 2, in which recovered carbon black with a particle size of 3 to 12 µm exceeds the specific area ratio when analyzed by image analysis, cracked during extrusion molding and had poor extrusion processability.

The rubber compositions for extrusion molding in Examples 1 and 2 containing recovered carbon black had excellent carbon neutrality due to the inclusion of recovered carbon black.

Furthermore, the rubber compositions for extrusion molding in Examples 1 and 2 containing recovered carbon black have a higher volume resistivity than the rubber composition for extrusion molding in Reference Example 1 which does not contain recovered carbon black, and the rubber composition with such a volume resistivity may be used for grounding.

Although specific forms of the present disclosure are shown in the above examples, the above examples are merely illustrative and are not to be construed as limiting. Various modifications apparent to those skilled in the art are contemplated to be within the scope of the present disclosure.

### INDUSTRIAL APPLICABILITY

The rubber composition for extrusion molding according to the present disclosure may be suitably used for extrusion molding, especially extrusion molding using an extruder that performs draw-down extrusion in a die. The rubber composition for extrusion molding according to the present disclosure is suitable for a rubber layer for hoses and suitably used for, for example, radiator hoses used to connect the engine to the radiator in automobiles and other vehicles, engine cooling system hoses such as heater hoses used to connect the engine to the heater core, refrigerant transport hoses for coolers, fuel cell vehicle hoses such as methanol fuel hoses and hydrogen fuel hoses, and automobile hoses such as gasoline fuel hoses. The hose described above may be used not only for automobiles but also for other transport machinery (airplanes, industrial transport vehicles such as forklifts, excavators, and cranes, rail vehicles, etc.).

### REFERENCE SIGNS LIST

1 crosshead die
2 extruder
3 feed line
4 mandrel
5 inlet of crosshead die
6 outlet of crosshead die
11 rubber inner layer
12 reinforcing yarn layer
13 rubber outer layer

## Claims

1. A rubber composition for extrusion molding, comprising:
a rubber component, and
recovered carbon black,
wherein, when the rubber composition for extrusion molding is analyzed under following image analysis conditions, the recovered carbon black with a particle size of 3 to 12 µm has an area ratio of 5.9 to 12.1%:
CLAHE algorithm:
contrast limit: 2.0
grid size: 8,8
Non-local means filter:
h: 15
template window size: 7
search window size: 21
Adaptive binarization:
black size: 101
C: -4.

2. The rubber composition for extrusion molding according to claim 1, further comprising petroleum-derived carbon black.

3. The rubber composition for extrusion molding according to claim 2, wherein a mass ratio of the recovered carbon black to the petroleum-derived carbon black (recovered carbon black/petroleum-derived carbon black) is 10/90 to 90/10.

4. The rubber composition for extrusion molding according to any one of claims 1 to 3, wherein a total amount of carbon black in the rubber composition for extrusion molding is 100 parts by mass or more with respect to 100 parts by mass of the rubber component.

5. A hose comprising the rubber composition for extrusion molding according to any one of claims 1 to 4.

6. A method for producing the hose according to claim 5, comprising: extrusion-molding the rubber composition for extrusion molding using a draw-down extrusion extruder.
